# EUROPEAN PATENT APPLICATION

(11) **EP 0 945 833 A2**
(43) Date of publication of application: **29.09.1999**
(21) Application number: 99200910.0
(22) Date of filing: 23.03.1999
(51) Int. Cl.: G07F 7/10

(54) **Method and system for remote banking with a multi-memory technology smart card**

(30) Priority: 26.03.1998 US 79366
(71) Applicant: Citicorp Development Center, Inc., Los Angeles, California 90066 (US)
(72) Inventor: Kawan, Joseph C., Hollywood, California 90068 (US)
(74) Representative: Hynell, Magnus

(57) **Abstract**

A method and system for remote banking with a multi-memory technology smart card makes use of a smart card having a transactional type memory, such as an integrated circuit chip module memory, for example, for daily merchant type transactions, and a historical type memory, such as an optical stripe memory to store more voluminous information, such as account records, medical and personal information for a customer. For daily transactions, data representing, for example, monetary value is stored in the transactional memory and used for merchant transactions, and the merchant transactions are recorded in the transactional memory. From time to time, the merchant transaction records are transferred to the historical memory. Likewise, data representing monetary value can be stored in the historical memory, and from time to time, such data can be transferred to the transactional memory.

## Description

### Cross Reference to Related Applications

This application claims the benefit of U.S. Provisional Application No. 60/079,366 filed March 26, 1998.

### Field of the Invention

The present invention relates to smart cards, and more particularly, to a method and system for remote banking with smart cards having multiple technology memory capabilities.

### Background of the Invention

With the internationalization of business, many communities in remote parts of the world are exposed to current financial devices, like credit cards or debit cards, but they may be unable to take advantage of them because the technological infrastructure is not available. Because these areas are remote, it may be too expensive to establish on-line connections to every business or every consumer.

Despite this difficulty, it is desirable to bring these areas up to speed so that outside businesses can effectively deal with these communities. Further, the customers in such communities desire to conduct transactions utilizing the latest devices. Thus, a single card that can interact with current systems, yet has the ability to perform transactions without the benefit of connections to on-line systems is desired.

The use of magnetic stripe cards is common in areas having technological infrastructure, however, their utility is confined by their relatively limited memory capability. The magnetic stripe on a typical card comprises 2 tracks where data can be stored and accessed. The standards for determining location and types of data to be stored on the tracks are identified by the international Standards Organization (ISO). Generally, certain industry information must be maintained on one of the tracks, with some open data fields that may be utilized. These open data fields, however, are typically limited to storing only a couple dozen characters. Similarly, very limited information, typically the cardholder's name and account number, may be stored on the other track.

Because of the limited data storage capabilities of magnetic stripe cards, the data on the card is generally not manipulated. Instead, the data is accessed by other systems and used as a pointer to data on those systems that can be manipulated. For example, when a magnetic stripe card is swiped in an automated teller machine (ATM) transaction, the on-line ATM reads the account number information on the card. The ATM then accesses the appropriate account in the on-line system and prompts the user to verify their identity by entering a personal identification number (PIN). The on-line ATM system then checks that the entered PIN matches the account PIN that is stored on-line. When there is a match, the ATM allows a transaction to proceed and the on-line account information is adjusted accordingly. Nothing is written onto the magnetic stripe on the card. The stripe is just used for identification purposes so that the on-line system can be accessed. Thus, the data storage capability of magnetic stripe cards limits their usage to transactions linked to on-line systems without updating data on the card itself.

In response to these limitations, integrated chip cards or smart cards have been developed. Smart cards are similar to magnetic stripe cards in size and appearance, but instead of having a magnetic stripe along the back side, they have a micro-computer chip embedded within the card. Current industry semiconductor chip technology could give smart cards the ability to store about 1 megabyte of data, though typical smart card non-volatile memory size is 16K of EEPROM. And because the chips have computer functionality, they have the ability to store and run programs that can manipulate data.

Yet, with the ever-increasing demands of technology, the storage capability of smart card chips is deemed restrictive. For example, if the cardholder wished to keep a log of their transactions within the chip memory, only a relatively limited number of transactions can be stored before reaching the memory limit. Further, only a few programs may be stored in the chip memory. Thus, even though current smart cards offer more storage space and data manipulation capabilities than magnetic stripe cards, they still do not completely satisfy all of the cardbolder's needs.

### Summary of the Invention

It is a feature and advantage of the present invention to provide a method and system for remote banking, for example, in areas with little or no banking infrastructure.

It is another feature and advantage of the present invention to provide a remote banking method and system which can be utilized to stimulate banking and commerce in areas having little or no banking infrastructure.

It is an additional feature and advantage of the present invention to provide a method and system for remote banking with a multi-memory technology smart card which allows a customer to store and manipulate financial data, as well as personal data, on the card to enable financial transactions in remote areas where on-line systems and capabilities are limited.

It is a further feature and advantage of the present invention to provide a method and system of remote banking, which enables both commerce and banking to be conducted in areas with little or no banking infrastructure.

To achieve the stated and other features, advantages and objects of the present invention, an embodiment of the invention provides a method and system for remote banking with a multi-memory technology smart card. The method and system for an embodiment of the present invention stores data representing monetary value in a transactional memory of the smart card for the customer, and transfers data representing at least a portion of the stored monetary value to a merchant in a daily type transaction, such as a merchant transaction.

The method and system for an embodiment of the invention records the merchant transaction in the transactional memory of the smart card for the customer. From time to time, in order to make room for additional transaction records, the method and system for an embodiment of the invention transfers the merchant transaction record to a historical memory of the smart card. The transactional memory of the smart card is, for example, an integrated circuit chip module memory, and the historical memory is, for example, an optical stripe historical memory or a thin film semi-conductor historical memory of the smart card.

In an embodiment of the present invention, the data representing monetary value is stored in one or more electronic purses in the transactional memory of the smart card, for example, for use in daily merchant type transactions. Further, the data is stored, for example, in an account for the customer in the electronic purse, such as a checking account or a savings account stored in the electronic purse.

In an embodiment of the present invention, in order to store the data representing the monetary value, the data is received by the transactional, memory, for example, at an on-line terminal, such as an automated teller machine, which can be coupled to an on-line database of a financial institution, such as a bank. The data representing the monetary value can be received by the on-line terminal, for example, from the on-line database on a periodic basis and stored for the customer at the on-line terminal. Further the monetary data stored for the customer at the on-line terminal can be periodically updated by the on-line database coupled to the terminal.

In an embodiment of the present invention, alternatively, the data representing the monetary value can be received by the transactional memory from the historical memory of the smart card. The data can be stored in the histoncal memory and transferred to the transactional memory, for example, with a smart card reader/writer device, such as the reader/writer device at an on-line terminal or at a remote terminal or with a personal input reader/writer device.

In an embodiment of the present invention, in addition to data representing monetary value, the transactional memory of the smart card also stores, for example, secret information for the customer, such as secret information for access by the customer to the historical memory of the smart card. The type of secret access information stored for the customer in the transactional memory of the smart card includes, for example, one or more encrypted keys or one or more personal identification numbers for access by the customer to the historical memory of the smart card.

In an embodiment of the present invention, in a transaction, such as a daily type merchant transaction, data representing, for example, a portion of the monetary value stored for the customer is transferred to the merchant in exchange for goods and/or services at a terminal, such as a merchant terminal. The merchant can have a merchant smart card which also has a transactional memory, and the data representing monetary value can be transferred to the transactional memory of the merchant smart card at the merchant terminal. Likewise, the merchant can transfer the data representing the monetary value from the transactional memory of the merchant smart card to a historical memory of the merchant smart card at a terminal.

In an embodiment of the present invention alternatively, the merchant can transfer the data representing monetary value from the transactional memory of the smart card to an on-line database, for example, of a financial institution, such as a bank, at an on-line terminal coupled to the on-line database. Further, the merchant can transfer the data representing monetary value from either or both of the transactional memory of the merchant smart card and the historical memory of the merchant smart card to the on-line database at the on-line terminal coupled to the on-line database.

In an embodiment of the present invention, in the merchant type transaction, the data representing a portion of the stored monetary value of the customer is transferred to the merchant, for example, from the electronic purse of the transactional memory of the customer's smart card. The data can be transferred from an account stored for the customer in the electronic purse, such as a checking account or a savings account stored in the electronic purse. Further, the data can be transferred to the transactional memory from the historical memory of the smart card. For example, the data can be transferred to the transactional memory from a file related to a banking relationship, such as a banking relationship account, stored for the customer in the historical memory of the smart card.

In an embodiment of the present invention, a record of the merchant transaction is stored, for example, in the electronic purse of the transactional memory of the customer's smart card. The transaction record is stored, for example, in the account stored for the customer in the electronic purse of the transactional memory, such as the checking account or the savings account. Thereafter, the transaction record can be transferred, for example, from the electronic purse of the transactional memory to the historical memory of the smart card and stored, for example, in a banking relationship account or a banking relationship transaction file of the historical memory of the smart card for the customer.

In an embodiment of the present invention, additionally, other information may be stored for the customer in the historical memory of the smart card, such as information related to one or more government programs. Further, information related to health care for the customer can also be stored in the historical memory. Likewise, information related to taxation can be stored for the customer in the historical memory. In addition, information related to identification for the customer can be stored in the historical memory, as well as information related to medical emergencies for the customer. The other information stored for the customer in the historical memory can be periodically updated, for example, at a terminal, such as a remote terminal or an on-line terminal, or with a personal input device.

Additional objects, advantages and novel features of the invention will be set forth in part in the description which follows, and in part will become more apparent to those skilled in the art upon examination of the following or may be learned by practice of the invention.

### Brief Description of the Drawings

Fig. 1 is a chart which shows sample types of information stored in the dual memories of the smart card in an application of an embodiment of the present invention;
Fig. 2 is a shows schematically a sample multi-memory technology smart card for an application of an embodiment of the present invention;
Fig. 3 shows schematically an overview of key components in the process of using the smart card at a remote terminal for an application of an embodiment of the present invention;
Fig. 4 shows schematically an overview of key components in the process of using the smart card at a central terminal for an application of an embodiment of the present invention;
Fig. 5 is a flow chart which provides further detail regarding the process of using the transactional memory for daily transactions and transferring transaction records to the historical memory of the smart card for an application of an embodiment of the present invention;
Fig. 6 is a schematic overview of key components in the process of using the smart card at an automated teller machine for an application of an embodiment of the present invention;
Fig. 7 is a schematic overview of the key components in the process of using the smart card with a personal card reader/writer and input device for an application of an embodiment of the present invention; and
Fig. 8 is a schematic overview of key components in the process of using the smart card at a merchant terminal in a transaction with a merchant also using a smart card in an application of an embodiment of the present invention.

### Detailed Description of the Invention

Referring now in detail to an embodiment of the invention, an example of which is illustrated in the accompanying drawings, the multi-memory technology smart card for an embodiment of the present invention provides a method and system for remote banking, for example in areas with little or no banking infrastructure. The remote banking system for an embodiment ofthe present invention may be utilized, for example, to stimulate banking and commerce in areas having little or no banking infrastructure.

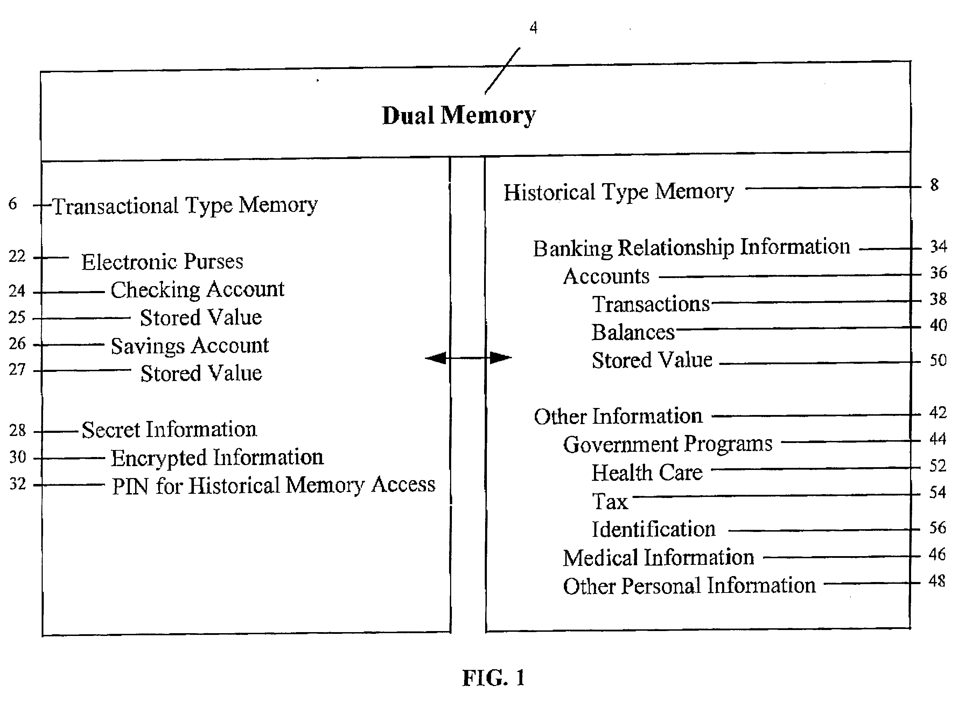

In an embodiment of the present invention, the multi-memory technology smart card has multiple memory capabilities. Fig. 1 is a chart which shows examples of data stored in the multiple memories of the multi-memory technology smart card for an application of an embodiment of the present invention. Referring to Fig. 1, the multi-memory smart card has, for example, dual memory capabilities 4 of different technologies. A first transactional-type memory capability 6 is generally used for daily merchant-type transactions. A second historical-type memory capability S is generally used to store more voluminous information, such as account records, medical and personal information.

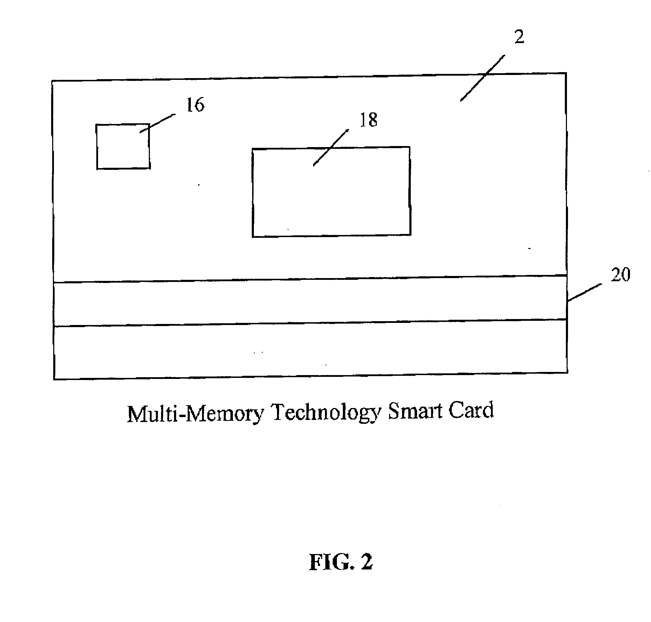

In an embodiment of the present invention, the transactional type memory capability 6 uses, for example, an integrated circuit (IC) chip module memory, and the historical type memory capability 8 uses, for example, an optical stripe memory. Fig. 2 is a schematic view of an example of the multi-memory smart card 2 for an application of an embodiment of the present invention. The card 2 includes, for example, a smart card IC chip module 16 and an optical stripe memory 18. The card 2 can also include, for example, a magnetic stripe memory 20 for compatibility with current systems. The JC chip module 16 comprises the transactional memory 6, and it is used for everyday transactions and storing limited information. The IC chip module 6 enables a customer to use the smart card 2 to perform daily transactions, such as exchanging value.

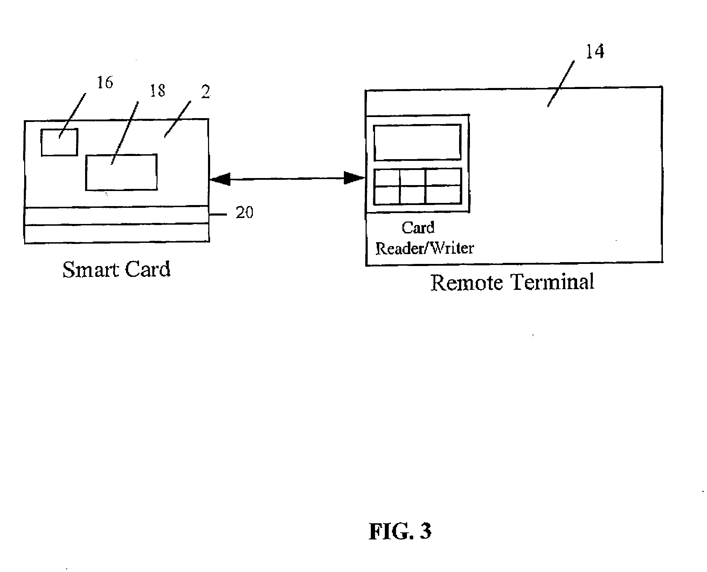

In an embodiment of the present invention, smart card 2 is used to conduct remote banking, for example, at a remote terminal, such as a merchant terminal, or at a central terminal for on-line database connections. Fig. 3 shows schematically an overview of key components for use of the smart card 2 at a remote terminal in an application of an embodiment of the present invention. Referring to Fig. 3, the smart card 2 is used at the remote terminal 14, such as a merchant terminal, to conduct daily transactions.

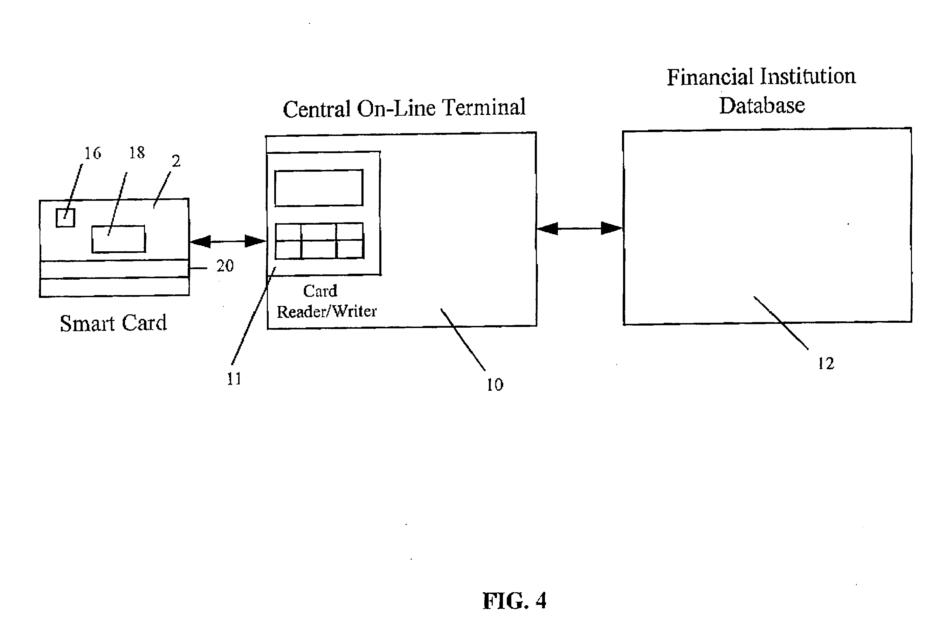

Fig. 4 shows schematically an overview of key components for use of the smart card 2 at a central terminal in an application for an embodiment of the present invention. Referring to Fig. 4, the smart card 2 is used at the central terminal 10 for on-line connection to the database 12 of a financial institution, such as a bank. Thus, the remote banking system of an embodiment of the present invention provides a multi-memory technology card 2 to be used with remote terminals 14 for daily transactions and with a central terminal 10 for on-line information updates.

In an embodiment of the present invention, the transactional memory 6 stores one or more electronic purses and is used, for example, for daily merchant type transactions, such as exchanging value. Referring to Fig. 1, for example, electronic purses 22 are set up in the IC chip 16 to store value 25, 27. The electronic purses 22 are accessed, for example, by a merchant when the card 2 is used to make a purchase. The electronic purses 22 relate, for example, to a checking account 24 and a savings account 26, and these accounts can be updated accordingly after a transaction, such as a merchant transaction, is performed.

In an embodiment of the present invention, the IC chip memory 6 is limited, however, and is able to store only a relatively small number of transactions, for example, about 50 transactions. When the chip memory 6 reaches its limit, the record of transactions is moved to the historical memory 8 to enable the card to be used for further transactions. Additionally, the IC chip memory 6 may store secret information 28, such as encrypted information 30 or a special personal identification number (PIN) 32 that enables the customer to access the historical memory 8.

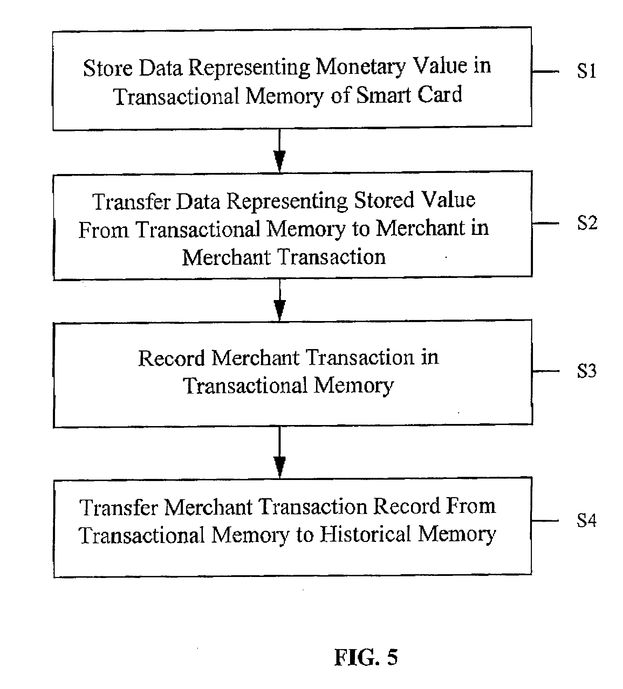

Fig. 5 is a flow chart which provides further detail regarding the process of recording daily transactions using the transactional memory 6 and transferring transaction records to the historical memory 8 of the smart card 2 in an application of an embodiment of the present invention. For example, at S1, the customer stores data representing monetary value in the transactional memory 6 of the smart 2. At S2, the customer transfers data representing stored value from the transactional memory 6 to a merchant in a merchant transaction. At S3, a record of the merchant transaction is automatically stored in the transactional memory 6 of the smart card 2. At S4, the merchant transaction record is transferred from the transactional memory 6 to the historical memory 8 of the smart card 2 to make room in the transactional memory, for example, for additional transactions.

In an embodiment of the present invention, the historical memory 8 uses, for example, an optical stripe memory 18 having a memory capability up to about 4 megabytes (MB). Alternatively, the historical memory 8 can use, for example, a thin-film semi-conductor memory occupying the interior surface of the card 2, The historical memory 8 is used to store, for example, banking relationship information 34, such as accounts 36, transactions 38 and balances 40. The historical memory 8 is also used to store other information 42, such as government programs 44, medical information 46 and other personal information 48.

In an embodiment of the present invention, value 50 is loaded and stored in the accounts 36 in the historical memory 8, so that value can be transferred to the transactional memory 6 when desired. Access to the historical memory 8 is controlled by encrypted keys 30, or other similar methods, stored within the transactional memory 6. Thus, the historical or secondary memory 8 allows very valuable information to be securely carried within the card 2 without be being exposed to daily transactions. Thus, a customer can rely on the multi-technology card 2 for storing and manipulating data and performing transactions. Such capabilities are highly desirable in certain remote areas, such as parts of countries like China, where on-line systems and capabilities are relatively limited.

In an embodiment of the present invention, in operation, the customer fills out an application for the multi-memory technology card 2 at, for example, a bank or government location. Upon approval, the bank or government entity initializes the optical stripe 18 and IC chip module 16 with the required financial and data structures, and also personalizes the card with the customer's information. If required, government operated or mandated programs or information reports, such as health care 52, tax 54, identification 56, and other similar programs, are set-up or maintained on the card 2.

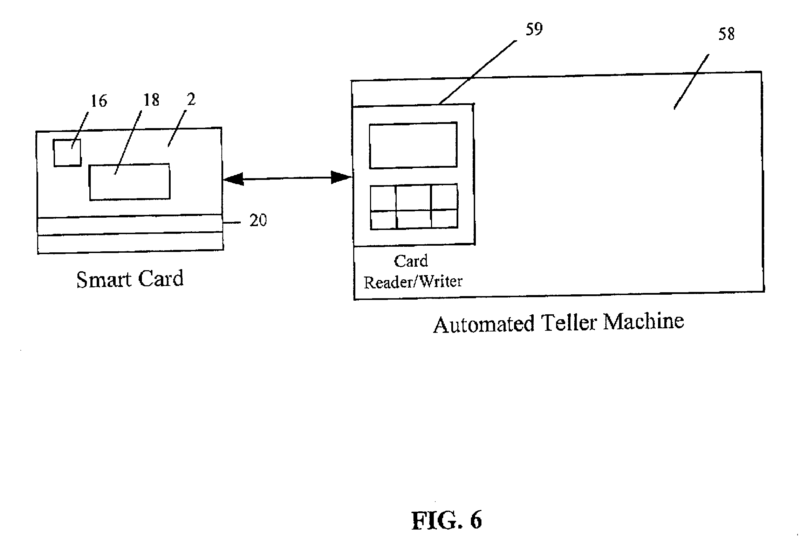

In an embodiment of the present invention, upon initialization and activation, the card 2 is forwarded to the customer, who can use a terminal, such as an automated teller machine (ATM) type terminal, to change some of the options, for example, for utilizing the optical stripe memory 10. Fig. 6 is a schematic overview of key components for use of smart card 2 at an automated teller machine for an application of an embodiment of the present invention. If the customer wishes to change the options, the customer can take the card to the ATM type terminal 58, that is able to read and write to the card 2 using a card reader/writer 59. Further, the customer can load value and check the loaded data at the ATM type terminal 58. Once the card 2 has been activated and loaded, the customer can use the card as a form of identification or for on- and off-line stored value purchases.

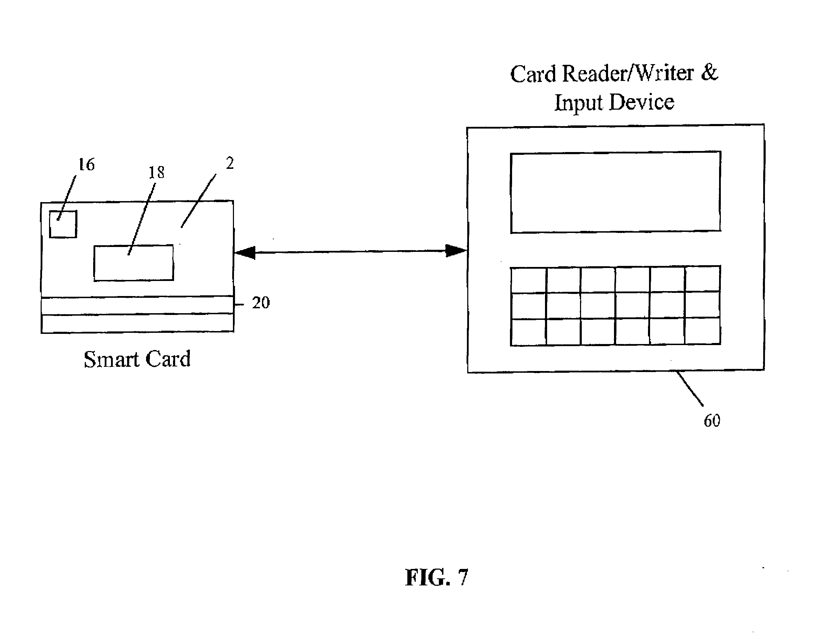

In an embodiment of the present invention, the customer can view and manipulate information stored on the card using a personal card reader/writer and input device. Fig. 7 shows a schematic overview of key components for use of the smart card 2 with a personal reader/writer and input device for an application of an embodiment of the present invention. Using the personal reader/writer and input device 60, the customer can view and manipulate the information, balances and transactions stored on the card 2. When the stored value on the card is low, or when the number of transactions stored in the IC chip module 16 begins to approach filling the chip's memory 6, the system can alert the customer. The customer can connect the card 2 to the on-line system 12, as shown in Fig. 4, to transfer value from on-line accounts into the stored value purses 22.

In an embodiment of the present invention, as an alternative to connecting the card 2 to the on-line system 12, the customer can insert the card 2 in the reader/writer device 60, which is capable of transferring information between the IC chip 16, optical stripe 18 and magnetic stripe 20. Using the reader/writer device 60, the customer can, for example, clear the IC chip memory 6 so that more transactions can be performed. The system can prompt the customer with options for transferring information, or the transfer can automatically be performed, such as for government mandated programs.

In an embodiment of the present invention, when the customer connects the card 2 to the on-line system 12, the customer is given the additional options, for example, of viewing and transferring other financial or governmental information that has changed since the last time the customer made an on-line connection. There may be only one on-line terminal 10 in a given location, such as a town or village, but remote off-line terminals 14 may be distributed throughout the location. At these remote terminals 14, the customer can access and manipulate the information on the card 2. Optionally, the remote terminals 14 can have printing capability so that the customer can obtain hard copies of desired information.

An embodiment of the present invention provides a remote banking system in an area without a banking infrastructure, such as a town or village in an isolated part of China. In such a town or village, for example, only one or two central terminals 10 exist that only make on-line connections to a main database 12 a few times a day due to the expense of such a connection. During these link ups, the system downloads account information and changes from the main database 12, such as debits or credits to the account from outside sources, relevant to account holders in that location. During the periodic link ups between the central terminal 10 and the main database 12, the central terminal also sends account information and changes that it has stored back to the main database. The main database 12 updates the accounts and sends the updated information back to the central terminal 10, if it relates to account holders in that location. Thus, the cental terminal 10 is brought up to date with the main on-line database 12.

In an emboditnent of the present invention, various account information and changes are stored on the central terminal 10 through interaction with the multi-memory technology card 2. The central terminal 10 is able to read and write to the IC chip and optical memories 6, 8 on the card 2. So, a card 2 inserted into the central terminal 10 is read by the terminal and updated after the proper security codes are entered. The central terminal 10 can move stored transactions from the IC chip memory 6 to the optical stripe memory 8, freeing the chip memory to perform more transactions. In addition, adjustments between the accounts on the main database 12 and the card memories 6, 8 can be made, based on transactions from outside areas and transactions with the card 2. For example, if a company from outside the region makes a deposit to the on-line account, this change in balance is communicated to the central terminal 10, and the balances on the card 2 can be adjusted.

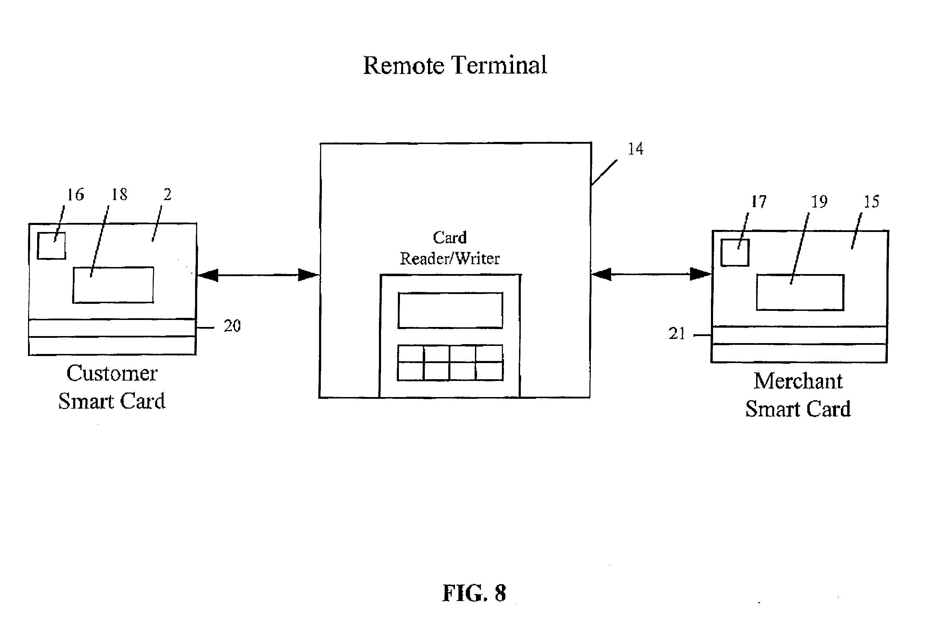

In an embodiment of the present invention, the card 2 is also used for transactions with local businesses in a manner similar to current merchant terminal transactions. Fig. 8 is a schematic overview of key components for use of the smart card 2 at a merchant terminal in a transaction with a merchant also using a smart card for an application of an embodiment of the present invention. The merchant terminals 14 in the particular remote location, for example, do not have on-line connections to make adjustments to the on-line accounts. Instead, the particular merchant terminals 14 transfer value from a customer's card 2 to a similar multi-memory technology card 15 held by the merchant and inserted in the merchant terminal.

In an embodiment of the present invention, in such a transaction at the merchant terminal 14, at the time , for example, of purchase by the customer from the merchant, the customer's card 2 is inserted in the merchant terminal 14, and the customer is given the option of selecting which account is to be debited. The customer has at least one electronic purse 22 stored within the IC chip memory 6 that is used for this type of transaction. The customer, however, can have checking or saving accounts 24, 26 in the IC memory 6, or the customer can opt for accounts 36 within the optical stripe memory 8 to be debited.

In an embodiment of the present invention, when the customer makes a choice and enters the customer's selection, the selected account on the customer's card 2 is debited, and the balance is updated. Similarly, a credit relating to the customcr's account is loaded, for example, into a transactional memory 17 of the merchant's card 15. When the merchant's card 15 becomes full, the merchant takes the merchant's card to the central terminal 10 to move the credits from an IC chip memory 17 to an optical stripe memory 19 on the merchant's card or to update the memories with the on-line system 12. Thus, commerce and banking may be conducted in an environment with little or no banking infrastructure.

Various preferred embodiments of the invention have been described in fulfillment of the various objects of the invention. It should be recognized that these embodiment s are merely illustrative of the principles of the present invention. Numerous modifications and adaptations thereof will be readily apparent to those skilled in the art without departing from the spirit and scope of the present invention. Accordingly, the invention is only limited by the following claims.

## Claims

1. A method for remote banking with a multi-memory technology smart card for a customer, comprising:
storing data representing monetary value in a transactional memory of the smart card for the customer's
transferring data representing at least a portion of the stored monetary value to a merchant in a merchant transaction for the customer;
recording the merchant transaction in the transactional memory for the customer;
transferring the transaction record to a histoncal memory of the smart card for the customer.

2. The method of claim 1, wherein storing the data representing monetary value in the transactional memory further comprise storing the data in an integrated circuit chip module transactional memory of the smart card.

3. The method of claim 1, wherein transferring the transaction record to the historical memory of the smart card further comprises transferring the transaction record to an optical stripe historical memory of the smart card.

4. The method of claim 1, wherein transferring the transaction record to the historical memory of the smart card further comprises transferring the transaction record to a thin film semi-conductor historical memory of the smart card.

5. The method of claim 1, wherein storing the data representing monetary value in the transactional memory further comprises storing the data in an electronic purse in the transactional memory of the smart card.

6. The method of claim 5, wherein storing the data in the electronic purse further comprises storing the data in an account stored for the customer in the electronic purse of the smart card.

7. The method of claim 6, wherein storing the data In the account of the electronic purse further comprises storing the data in a checking account stored for the customer in the electronic purse of the smart card.

8. The method of claim 6, wherein storing the data in the account of the electronic purse further comprises storing the data in a savings account stored for the customer in the electronic purse of the smart card.

9. The method of claim 1, wherein storing the data representing monetary value in the transactional memory of the smart card timber comprises receiving the data by the transactional memory of the smart card.

10. The method of claim 9, wherein receiving the data representing monetary value by the transactional memory of the smart card further comprises receiving the data by the transactional memory of the smart card at an on-line terminal.

11. The method of claim 10, wherein receiving the data representing monetary value at the on-line terminal further comprises receiving the data by the transactional memory of the smart card from an on-line database coupled to the on-line terminal.

12. The method of claim 11, wherein the on-line terminal further comprises an automated teller machine.

13. The method of claim 10, wherein receiving the data representing monetary value at the on-line terminal further comprises periodically receiving the data by the on-line terminal from an on-line database coupled to the on-line terminal.

14. The method of claim 13, wherein periodically receiving the data representing monetary value by the on-line terminal further comprises storing the periodically received data at the on-line terminal for the customer.

15. The method of claim 14, wherein periodically receiving the data representing monetary value by the on-line terminal further comprises periodically updating the stored data by the on-line database coupled to the on-line terminal.

16. The method of claim 13, wherein the on-line terminal further comprises an automated teller machine.

17. The method of claim 9, wherein receiving the data representing monetary value by the transactional memory further comprises receiving the data by the transactional memory of the smart card from the historical memory of the smart card.

18. The method of claim 17, wherein receiving the data representing monetary value from the historical memory of the smart card further comprises bansferring the data from the historical memory of the smart card to the transactional memory of the smart card.

19. The method of claim 18, wherein transferring the data representing monetary value from the historical memory to the transactional memory of the smart card farther comprises transferring the data from the historical memory of the smart card to the transactional memory of the smart card with a smart card reader/writer device.

20. The method of claim 19, wherein transferring the data representing monetary value from the historical memory to the transactional memory of the smart card with the smart card reader/writer device further comprises transferring the data from the historical memory of the smart card to the transactional memory of the smart card with a smart card reader/writer device at an on-line terminal.

21. The method of claim 19, wherein transferring the data representing monetary value from the historical memory to the transactional memory of the smart card with the smart card reader/writer device further comprises transferring the data from the historical memory of the smart card to the transactional memory of the smart card with a card reader/writer device at a remote terminal.

22. The method of claim 19, wherein transferring the data representing monetary value from the historical memory to the transactional memory of the smart card with the smart card reader/writer device further comprises transferring the data from the historical memory of the smart card to the transactional memory of the smart card with a personal input smart card reader/witer device.

23. The method of claim 1, further comprising storing secret information for the customer in the transactional memory of the smart card.

24. The method of claim 23, wherein storing the secret information further comprises storing secret information in the transactional memory of the smart card for access by the customer to the historical memory of the smart card.

25. The method of claim 24, wherein storing the secret access information further comprises storing an encrypted key in the transactional memory of the smart card for access by the customer to the historical memory of the smart card.

26. The method of claim 24, wherein storing the secret access information further comprises storing a personal identification number in the transactional memory of the smart card for access by the customer to the historical memory of the smart card.

27. The method of claim 1, wherein transferring the data representing the portion of the stored monetary value to the merchant further comprises transferring the data to the merchant at a terminal.

28. The method of claim 27, wherein transferring the data representing the portion of the stored monetary value to the merchant at the terminal further comprises transferring the data to the merchant at a merchant terminal.

29. The method of claim 28, wherein transferring the data representing the portion of the stored monetary value to the merchant at the merchant terminal further comprises transferring the data to a transactional memory of a merchant smart card for the merchant at the merchant terminal.

30. The method of claim 29, further comprising transferring the data representing the portion of the stored monetary value from the transactional memory of the merchant smart card to a historical memory of the merchant smart card at a terminal for the merchant.

31. The method of claim 29, further comprising transferring the data representing the portion of the stored monetary value from the transactional memory of the merchant smart card to an on-line database at an on-line terminal coupled to the on-line database for the merchant.

32. The method of claim 30, further comprising transferring the data representing the portion of the stored monetary value from at least one of the transactional memory of the merchant smart card and tile historical memory of the merchant smart card to an on-line database at an on-line terminal coupled to the on-line database for the merchant.

33. The method of claim 1, wherein transferring the data representing the portion of the stored monetary value to the merchant further comprises transferring the data from the transactional memory of the smart card to the merchant.

34. The method of claim 33, wherein transferring the data representing the portion of the stored monetary value from the transactional memory of the smart card to the merchant further comprises transferring the data from an electronic purse stored in the transactional memory of the smart card to the merchant.

35. The method of claim 34, wherein transferring the data representing the portion of the stored monetary value from the electronic purse of the smart card to the merchant further comprises transferring the data from an account stored for the customer in the electronic purse of the smart card to the merchant.

36. The method of claim 35, wherein transferring the data representing the portion of the stored monetary value from the account stored in the electronic purse to the merchant further comprises transferring the data from a checking account stored in the electronic purse of the smart card for the customer to the merchant.

37. The method of claim 35, wherein transferring the data representing the portion of the stored monetary value from the account stored in the electronic purse to the merchant further comprises transferring the data from a savings account stored in the electronic purse of the smart card for the customer to the merchant.

38. The method of claim 1, wherein transferring the data representing the portion of the stored monetary value to the merchant further comprises transferring the data from the historical memory of the smart card to the transactional memory of the smart card.

39. The method of claim 38, wherein transferring the data representing the portion of the stored monetary value from the historical memory to the transactional memory of the smart card further comprises transferring the data from a file related to a banking relationship stored for the customer in the historical memory of the smart card to the transactional memory of the smart card.

40. The method of claim 39, wherein transferring the data representing the portion of the stored monetary value from the stored banking relationship file of the historical memory to the transactional memory of the smart card further comprises transferring the data from a banking relationship account stored for the customer in the historical memory of the smart card to the transactional memory of the smart card.

41. The method of claim 1, wherein recording the merchant transaction in the transactional memory of the smart card further comprises recording the merchant transaction in an electronic purse stored for the customer in the transactional memory of the smart card.

42. The method of claim 41, wherein recording the merchant transaction in the electronic purse of the smart card further comprises storing the record of the merchant transaction in an account stored for the customer in the electronic purse of the smart card.

43. The method of claim 42, wherein storing the record of the merchant transaction in the stored account of the electronic purse further comprises storing the record of the merchant transaction in a checking account stored for the customer in the electronic purse of the smart card.

44. The method of claim 42, wherein storing the record of the merchant transaction with stored account of the electronic purse further comprises storing the record of the merchant transaction in a savings account stored for the customer in the electronic purse of the smart card.

45. The method of claim 1, wherein tansferring the transaction record to the historical memory of the smart card further comprises storing the transaction record in a banking relationship account stored for the customer in the historical memory of the smart card.

46. The method of claim 45, wherein storing the transaction record in the banking relationship account of the smart card further comprises storing the transaction record in a banking relationship transaction file stored for the customer in the historical memory of the smart card.

47. The method of claim 1, further comprising storing other information for the customer in the historical memory of the smart card.

48. The method of claim 47, wherein storing the other information in the historical memory of the smart card further comprises storing information related to government programs for the customer in the historical memory of the smart card.

49. The method of claim 47, wherein storing the other information in the historical memory of the smart card further comprises storing information related to health care for the customer in the historical memory of the smart card.

50. The method of claim 47, wherein storing the other information in the historical memory of the smart card further comprises storing information related to taxation for the customer in the historical memory of the smart card.

51. The method of claim 47, wherein storing the other information in the historical memory of the smart card further comprises storing information related to identification for the customer in the historical memory of the smart card.

52. The method of claim 47, wherein storing the other information in the historical memory of the smart card further comprises storing information related to medical emergencies for the customer in the historical memory of the smart card.

53. The method of claim 47, wherein storing the other information in the historical memory of the smart card further comprises periodically updating the other information stored in the historical memory of the smart card.

54. The method of claim 53, wherein periodically updating the other information stored in the historical memory of the smart card further comprises periodically updating the stored information at a remote terminal for the customer.

55. The method of claim 54, wherein periodically updating the other information stored in the historical memory of the smart card further comprises periodically updating the stored information at an on-line terminal for the customer.

56. The method of claim 54, wherein periodically updating the other information stored in the historical memory of the smart card further comprises periodically updating the stored information with a personal input device for the customer.

57. A system for remote banking with a multi-memory technology smart card for a customer, comprising:
means for storing data representing monetary value in a transactional memory of the smart card for the customer;
means associated with the smart card for transferring data representing at least a portion of the stored monetary to a merchant in a merchant transaction for the customer;
means associated with the smart card for recording the merchant transaction in the transactional memory of the smart card for the customer; and
means associated with the smart card for transferring the transaction record to a historical memory of the smart card for the customer.

58. The system of claim 57, wherein the transactional memory of the smart card comprises an integrated circuit chip module memory of the smart card.

59. The system of claim 57, wherein the means for storing the data representing the monetary value further comprises a terminal.

60. The system of claim 59, wherein the terminal further comprises a remote terminal.

61. The system of claim 59, wherein the terminal further comprises an on-line terminal.

62. The system of claim 61, further comprising an on-line database coupled to the on-line terminal.

63. The system of claim 59, wherein the terminal further comprises an automated teller machine.

64. The system of claim 57, wherein the means for storing the data representing the monetary value further comprises a smart card reader/writer device.

65. The system of claim 57, wherein the means for transferring the data representing the portion of the stored monetary value comprises a terminal.

66. The system of claim 65, wherein the terminal further comprises a merchant terminal.

67. The system of claim 57, wherein the means for recording the merchant transaction in the transactional memory of the smart card further comprises a terminal.

68. The system of claim 67, wherein the terminal further comprises a merchant terminal.

69. The system of claim 57, wherein the means for transferring the transaction record to the historical memory of the smart card further comprises a terminal.

70. The system of claim 69, wherein the means for transferring the transaction record to the historical memory further comprises a smart card reader/writer device.

71. The system of claim 57, wherein the historical memory further comprises on optical stripe historical memory.

72. The system or claim 57, wherein the historical memory further comprises a thin film semi-conductor historical memory.

73. The system of claim 72, further comprising a magnetic stripe memory of the smart card associated With the transactional memory of the smart card.
